# EUROPÄISCHE PATENTANMELDUNG

(11) **EP 2 110 567 A2**
(43) Veröffentlichungstag der Anmeldung: **21.10.2009**
(21) Anmeldenummer: 09157836.9
(22) Anmeldetag: 14.04.2009
(51) Int. Cl.: F16B 39/24, F16B 39/282

(54) **Vorrichtung zur Sicherung einer Gewindeverbindung**

(30) Priorität: 15.04.2008 DE 102008001193
(71) Anmelder: Gritscher, Karl, 84032 Landshut (DE)
(72) Erfinder: Gritscher, Karl, 84032 Landshut (DE)
(74) Vertreter: Gustorf, Gerhard

(57) **Zusammenfassung**

Die Vorrichtung dient zur Sicherung einer Gewindeverbindung an Bauteilen (46) mit einer Schraube (10) und/oder einer Mutter (44) und mit einem Sicherungselement (26). Dieses ist schon vor der Herstellung der Verbindung drehfest mit der Mutter (44) bzw. dem Kopf (14) der Schraube (10) oder mit dem Bauteil (46) verbunden und weist Rastsitze (32) auf, in die bei der Herstellung der Verbindung wenigstens ein Eingriffselement (34) eingreift, das in Richtung der Rastsitze (32) federnd ist.

## Beschreibung

Die Erfindung betrifft eine Vorrichtung zur Sicherung einer Gewindeverbindung an Bauteilen mit einer Schraube und/oder einer Mutter und mit einem Sicherungselement.

Zur Sicherung von Schraubverbindungen sind zahlreiche Möglichkeiten nach dem Stand der Technik bekannt, die größtenteils Eingang in einschlägige Normen gefunden haben. Diese können in zwei große Gruppen unterteilt werden, nämlich in Formschlußsicherungen und kraftschlüssige Sicherungen. Als Formschlußsicherungen sind neben Stiften und Splinten, die in Bohrungen einer Schraube eingesetzt werden, auch Sicherungsbleche üblich, die zwischen eine Mutter oder den Kopf einer Schraube und ein Bauteil eingesetzt werden, wobei seitlich abstehende Lappen oder Nasen formschlüssig mit dem Bauteil in Eingriff kommen.

Bei den kraftschlüssigen Sicherungen handelt es sich häufig um Federringe, gewellte Federscheiben oder Zahnscheiben, die zwischen eine Mutter oder den Kopf einer Schraube und ein Bauteil eingesetzt werden. Nahezu allen kraftschlüssigen Sicherungen haftet der Nachteil an, daß sie sich lockern können, insbesondere bei Vibrationen, so daß ihre Zuverlässigkeit eingeschränkt ist.

Gegenstand der DE-A 1 961 646 ist ein Befestigungselement mit einer Klemmanordnung zwischen einem Gewindeteil und einer Sperrscheibe. Die Sperrscheibe ist dabei als eine gewellte Fächerscheibe aus Blech ausgebildet, die zwischen den Kopf einer Schraube und ein Bauteil eingelegt ist. Der Kopf der Schraube hat hierbei an seiner Unterseite (Klemmfläche) eine bestimmte Zahl von Sperrzähnen, die größer als die Zähnezahl der Fächerscheibe ist.

Damit soll erreicht werden, dass einerseits zum Festziehen ein gleichförmiges, progressiv zunehmendes Drehmoment aufgebracht werden muss, und dass andererseits ein Flachdrücken der Fächerscheibe verhindert wird. Die dem Bauteil zugewandte Seite der Sperrscheibe hat ebenfalls Sperrzähne, die sich in das Bauteil eindrücken, sofern dieses weicher als die Sperrscheibe ist.

In DE-C 515 577 ist eine unlösbare Schraubenmutter beschrieben und dargestellt, die zu ihrer Sicherung eine am Rand gezahnte Scheibe mit einem in ein Bauteil eingreifenden Stift sowie zusätzlich einen geschlitzten Sprengring benötigt, der mit einem abgewinkelten Ende in einem Einschnitt der Mutter eingreift.

Schließlich ist aus DE-C 231 945 eine Schraubensicherung bekannt, bei der eine Unterlagscheibe auf einen Schraubbolzen gesetzt ist, der zur Verdrehsicherung mit einem an seinem Rand ausgebildeten Stift in ein Loch der Unterlagscheibe eingreift. Diese hat einen ringförmigen Sitz für eine Federscheibe, gegen die sich beim Aufschrauben einer Mutter eine Zwischenscheibe anlegt. An der Mutter ist eine umlaufende Verzahnung mit einseitig ansteigenden Zähnen ausgebildet, die beim Aufschrauben der Mutter in Eingriff mit einer entsprechenden Sperrverzahnung der Zwischenscheibe kommen.

Der Erfindung liegt die Aufgabe zugrunde, eine Sicherungsvorrichtung der eingangs umrissenen Gattung zur Verfügung zu stellen, die gegenüber bisher bekannten Sicherungen eine hohe Zuverlässigkeit gewährleistet und konstruktiv einfach verwirklicht werden kann.

Diese Aufgabe wird gemäß der Erfindung dadurch gelöst, daß das Sicherungselement schon vor der Herstellung der Verbindung drehfest mit der Mutter bzw. dem Kopf der Schraube oder mit dem Bauteil verbunden ist und Rastsitze aufweist, in die bei der Herstellung der Verbindung wenigstens ein Eingriffselement eingreift, das in Richtung der Rastsitze federnd ist.

Das Sicherungselement kann hierbei ein integraler Bestandteil der Mutter bzw. des Kopfes der Schraube sein; alternativ besteht die Möglichkeit, das Sicherungselement an dem Bauteil auszubilden.

In allen Fällen gewährleistet die erfindungsgemäß vorgesehene Lösung eine formschlüssige und damit zuverlässige Sicherung nach Art einer Ratsche, bei der das federnde Eingriffselement beim Festziehen der Schraubverbindung nacheinander in die Rastsitze eingreift, bis es im festgezogenen Zustand der Schraubverbindung in den Rastsitz einrastet, der diesem festgezogenen Zustand entspricht.

In Abhängigkeit von der geometrischen Form der Rastsitze, im Fall einer Verzahnung von dem gewählten Flankenwinkel, ergibt sich hierbei entweder eine lösbare oder - bei einem widerhakigen Eingriff - eine nicht mehr zerstörungsfrei lösbare Sicherungsverbindung.

Um dennoch bei Bedarf die Sicherungsverbindung wieder öffnen zu können, kann nach einem weiteren Merkmal der Erfindung dem federnden Eingriffselement ein entgegen der Kraft der Feder wirkendes Löseelement zugeordnet sein.

Eine konstruktiv einfach herzustellende Möglichkeit besteht darin, das Sicherungselement aus einem Ring mit einer Durchtrittsöffnung für den Schaft einer Schraube auszubilden, von dem wenigstens ein Fortsatz für den formschlüssigen Eingriff in einen Sitz in dem Bauteil absteht.

Der Fortsatz kann hierbei aus einem Bolzen und der Sitz aus einer Bohrung bestehen. Bei einer alternativen Lösung bestehen der Fortsatz aus einer flachen Zunge und der Sitz aus einem Langloch.

Weitere Merkmal und Vorteile der Erfindung ergeben sich aus der folgenden Beschreibung von Ausführungsbeispielen, die in der Zeichnung dargestellt sind. Es zeigen:
Figur 1 die perspektivische Schrägansicht einer Schraube, deren Schaft ein aus einem Ring bestehendes Sicherungselement durchgreift, das formschlüssig mit einem Bauteil verbunden werden kann,
Figur 2 eine perspektivische Seitenansicht der Vorrichtung gemäß Figur 1 mit im Kopf der Schraube eingebauten Eingriffselementen,
Figur 3 eine Variante der Figuren 1 und 2, bei der der Kopf der Schraube in einem Käfig aufgenommen ist, der an der Ringscheibe mit federnder Rastzunge fest angebracht ist,
Figur 4 eine Variante der Figur 3, bei der die Ringscheibe an der Unterseite einer Mutter fest angebracht ist,
Figur 5 die perspektivische Ansicht eines ringförmigen Sicherungselementes ähnlich der Figur 3, jedoch mit widerhakenartiger Verzahnung,
Figur 6 die Draufsicht auf eine Variante der Figur 3,
Figur 7 die Schnittdarstellung in der Ebene A-A der Figur 6 in Verbindung mit einem ringförmigen Sicherungselement der Figur 5,
Figur 8 eine Variante der Figuren 1 und 2 in Verbindung mit einem ringförmigen Sicherungselement mit widerhakenartiger Verzahnung,
Figur 9 eine Schnittdarstellung der Figur 8,
Figur 10 die perspektivische Ansicht einer weiteren Ausführungsform mit einem drehfest am Bauteil angebrachten, ringförmigen Verbindungselement,
Figur 11 die Innenansicht der Ausführungsform der Figur 10 zur Darstellung des an der Unterseite des Kopfes des Schraube angeformten Sicherungselementes mit Verzahnung,
Figur 12 die Unteransicht einer Schraube mit angeformter Verzahnung,
Figur 13 eine Variante der Figur 12, bei der die Verzahnung an der Unterseite einer Mutter ausgebildet ist,
Figur 14 eine weitere Variante der Figuren 12 und 13, bei der die Verzahnung in das Bauteil eingeformt ist,
Figur 15 die Ansicht eines Bauteils mit eingesetzten, federnden Eingriffselementen,
Figur 16 in vergrößertem Maßstab den Ausschnitt A aus Figur 15,
Figur 17 die Ansicht einer weiteren Variante der Erfindung,
Figur 18 in vergrößertem Maßstab die Ansicht gemäß Figur 17 mit teilweiser Innenansicht,
Figur 19 eine Ausführungsform ähnlich der Figuren 1 und 2 mit lösbaren Raststiften im Kopf der Schraube,
Figur 20 die Innenansicht des Kopfes der Schraube der Figur 19,
Figur 21 in vergrößertem Maßstab die Einzelheit A der Figur 20,
Figur 22 die Draufsicht des Kopfes der Schraube der Figuren 19 und 20,
Figur 23 in vergrößertem Maßstab einen Schnitt in der Ebene A-A der Figur 22 mit lösbarem Raststift,
Figur 24 die Ansicht einer weiteren Ausführungsform,
Figur 25 in vergrößertem Maßstab die Ausführungsform der Figur 24 mit teilweiser Innendarstellung,
Figur 26 in vergrößertem Maßstab die Ansicht des Verbindungselements der Figuren 24 und 25,
Figur 27 eine weitere Ausführungsmöglichkeit für ein Verbindungselement in der Ansicht von unten,
Figur 28 das Verbindungselement der Figur 27 von schräg oben gesehen,
Figur 29 ein Bauteil mit Langloch und darin drehfest, jedoch in Richtung des Langloches verschiebbar angeordnetem Sicherungselement,
Figur 30 eine Variante der Figur 29,
Figur 31 eine weitere Variante der Figuren 29 und 30,
Figur 32 die Unteransicht des Bauteils mit Langloch, in das das Sicherungselement der Figur 31 eingesetzt ist,
Figur 33 in vergrößertem Maßstab die Unteransicht des in das Langloch eingesetzten Sicherungselementes,
Figur 34 die perspektivische Draufsicht auf das Sicherungselement der Figuren 31 bis 33,
Figur 35 eine Schnittdarstellung in der Ebene B-B der Figur 34,
Figur 36 eine Weiterentwicklung der Figuren 31 bis 35,
Figur 37 eine andere Ansicht der Vorrichtung nach Figur 36,
Figur 38 eine perspektivische Draufsicht auf ein weiteres Ausführungsbeispiel,
Figur 39 die Variante der Figur 38 von unten gesehen,
Figur 40 eine Ausführungsform mit einem eine Mutter aufnehmenden Käfig, der in eine verzahnte Bohrung eines Bauteils eingesetzt ist,
Figur 41 in vergrößertem Maßstab die Einzelheit A der Figur 40,
Figur 42 eine Variante der Figuren 40 und 41,
Figur 43 in vergrößertem Maßstab die Einzelheit A der Figur 42,
Figur 44 in Explosionsdarstellung die Schraubverbindungssicherung der Figuren 42 und 43,
Figur 45 in perspektivischer Unteransicht das Sicherungselement der Figuren 43 und 44,
Figur 46 eine Variante der Figur 45 mit einer Schraube,
Figur 47 in vergrößerter Ansicht die schräg von oben gesehene Variante der Figur 46 und
Figur 48 die Ansicht der Vorrichtung der Figuren 46 und 47 vor dem endgültigen Einsetzen der Schraube.

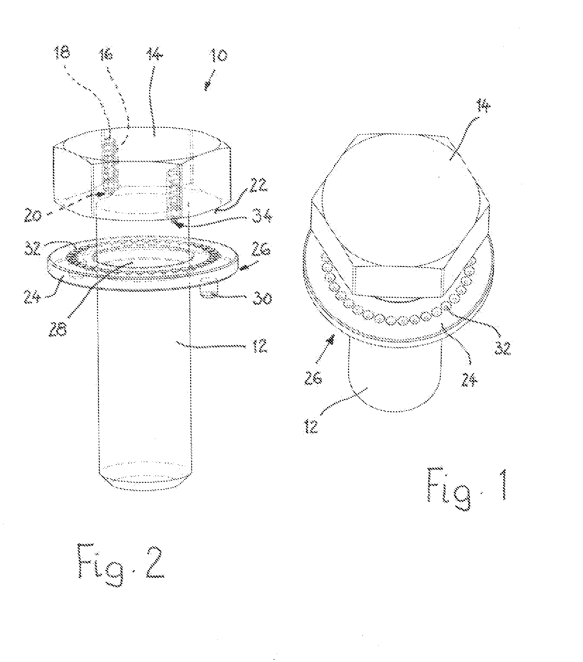

Die Figuren 1 und 2 zeigen eine erste Ausführungsmöglichkeit der Erfindung mit einer Schraube 10, deren Schaft 12 in eine nicht dargestellte Durchgangsbohrung eines ersten Bauteils eingreift, um dieses an einem zweiten Bauteil mit Gewindebohrung zu befestigen. In den Kopf 14 der Schraube 10 sind zwei zu deren Achse parallele, zylinderförmige Aufnahmebohrungen 16 eingearbeitet, in die jeweils eine Schraubendruckfeder 18 eingesetzt ist, welche einen Stift 20 nach unten drückt, so daß dieser über die Unterseite 22 des Kopfes 14 vorsteht.

Zwischen den Kopf 14 der Schraube 10 und das nicht gezeigte Bauteil ist ein als Ring 24 ausgebildetes Sicherungselement 26 eingesetzt, das eine zentrische Durchtrittsöffnung 28 für den Schaft 12 der Schraube 10 hat. Von der Unterseite des Ringes 24 stehen etwa diametral gegenüber zwei zylindrische Fortsätze 30 ab, die im eingebauten Zustand in eine entsprechende Bohrung des hier nicht gezeigten Bauteils eingreifen; auf diese Weise ist das Sicherungselement 26 drehfest mit dem ersten Bauteil verbunden.

In die Oberseite des Ringes 24 sind gleichmäßig auf dem Umfang verteilt kalottenförmige Rastsitze 32 eingearbeitet, die einen Lochkranz bilden und für den Eingriff der beiden federbelasteten Eingriffselemente 34 dienen, die hier als die erwähnten Stifte 20 ausgebildet sind.

Beim Festziehen der Schraube 10 in der Gewindebohrung des zweiten Bauteils greifen die beiden Stifte 20 unter der Einwirkung ihrer Druckfedern 18 nacheinander in die jeweiligen Rastsitze 32 ein, bis sie im festgezogenen Zustand einem unbeabsichtigten Lösen entgegen der Einschraubrichtung in Abhängigkeit von der Federkraft der beiden Druckfedern 18 entgegenwirken.

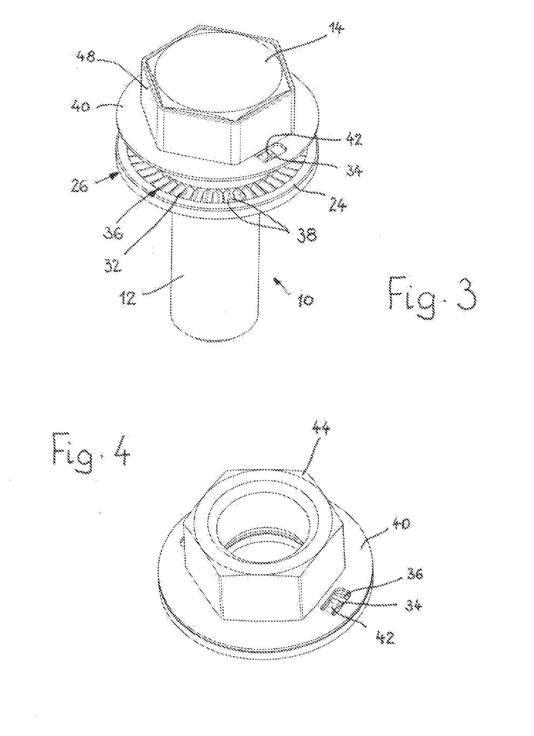

Bei der in Figur 3 gezeigten Variante der Erfindung sind die Rastsitze 32, die in die Oberseite des als Ring 24 ausgebildeten Sicherungselementes 26 eingearbeitet sind, hier als eine Verzahnung 36 ausgebildet. Die Flanken 38 jedes Zahnes haben nach beiden Seiten einen Anstellwinkel, der ein zerstörungsfreies Lösen der Sicherung möglich macht. Auch dieses Sicherungselement 26 ist wie im Beispiel der Figuren 1 und 2 drehfest an dem ersten Bauteil angebracht.

Wie Figur 3 weiter zeigt, ist auch hier wenigstens ein federndes Eingriffselement 34 vorgesehen, das als nach unten und damit in Richtung der Rastsitze 32 abgewinkeltes Ende einer federnden Zunge 42 ausgebildet ist, die aus einem scheibenförmigen Verbindungselement 40 ausgestanzt ist. Das Verbindungselement 40, das eine von der Kreisform abweichende Ausbildung haben kann, beispielsweise eine Polygonform, ist aus Blech hergestellt und fest mit einem hier sechseckigen Käfig 48 verbunden, beispielsweise angelötet oder angeschweißt. Die Form des Käfigs 48 entspricht der Form des Kopfes 14 der Schraube 10, so dass dieser in den Käfig 48 gesteckt werden kann, wodurch sich eine formschlüssige Verbindung zwischen dem Verbindungselement 40 und der Schraube 10 ergibt. Beim Festziehen der Schraube 10 rasten auch hier die Eingriffselemente 34 in die Rastsitze 32 der Verzahnung 36 ein.

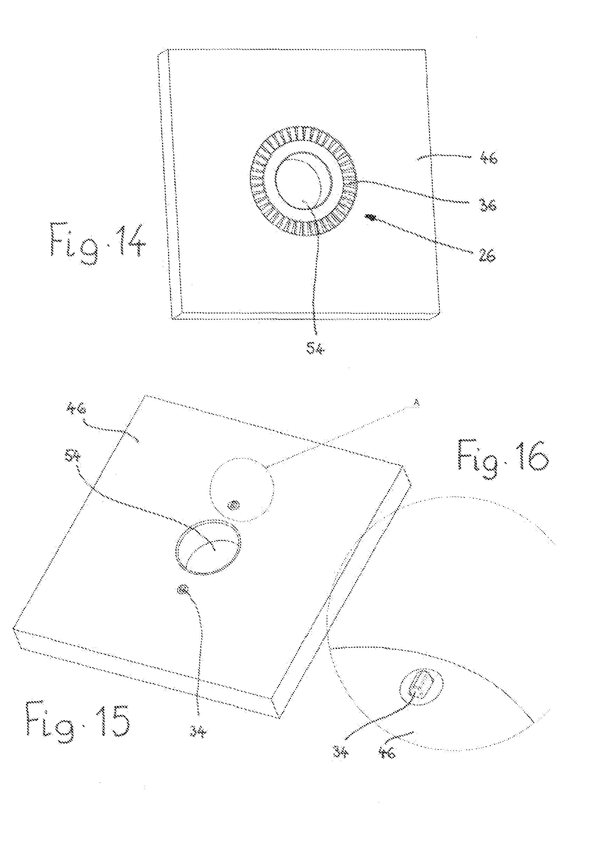

Bei der Ausführungsform der Figur 4 ist das Verbindungselement 40 fest mit einer Mutter 44 verbunden, die hier drehfest unmittelbar auf einem Bauteil 46 (vgl. Figur 14) oder über ein Sicherungselement 26 ähnlich der Figur 3 gesichert werden soll. Selbstverständlich besteht auch hier die Möglichkeit, das Verbindungselement 40 an einem Käfig 48 anzubringen, der dann zur formschlüssigen Aufnahme der Mutter 44 dient.

Die erläuterten Varianten der Figuren 3 und 4 stellen insbesondere bei geringen Stückzahlen eine kostengünstige Lösung dar, weil damit genormte Schrauben oder Muttern gesichert werden können, ohne an diesen konstruktive Änderungen vornehmen zu müssen.

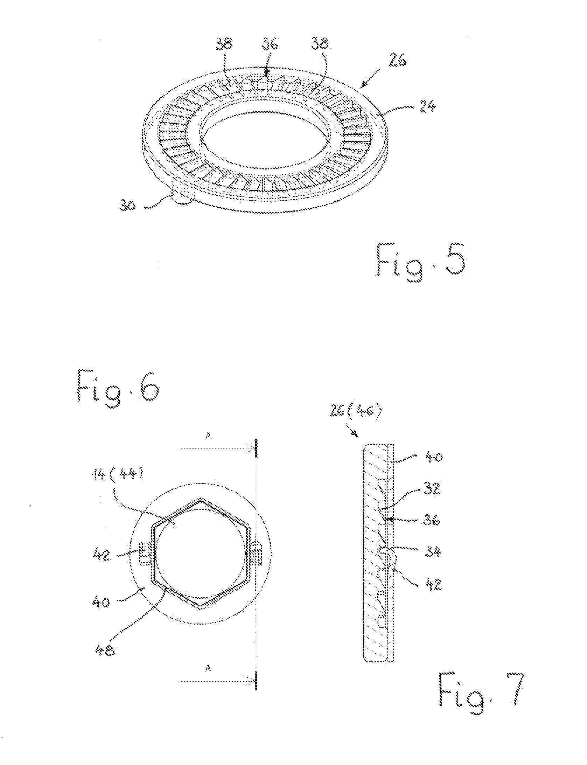

Figur 5 zeigt ein Sicherungselement 26 in Form eines Ringes 24 ähnlich demjenigen der Figur 3, wobei hier jedoch die Flanken 38 der Verzahnung 36 in den beiden Drehrichtungen unterschiedliche Flankenwinkel hat, so daß sich eine Widerhakenwirkung ergibt, die nicht zerstörungsfrei gelöst werden kann.

Eine derartige, nicht zerstörungsfrei lösbare Sicherung ist auch in der Ausführungsform der Figuren 6 und 7 dargestellt, bei der die widerhakenartige Verzahnung 36 in ein Bauteil 46 oder in ein Sicherungselement 26 eingearbeitet ist, während mit einer Mutter 44 oder dem Kopf 14 einer Schraube 10 ähnlich den Figuren 3 und 4 ein Verbindungselement 40 fest verbunden ist, aus dem zwei diametral gegenüberliegende Zungen 42 ausgestanzt sind, deren nach unten abgewinkelten Enden die Eingriffselemente 34 bilden, die in die Rastsitze 32 der Verzahnung 36 (Figuren 3 und 5) eingreifen.

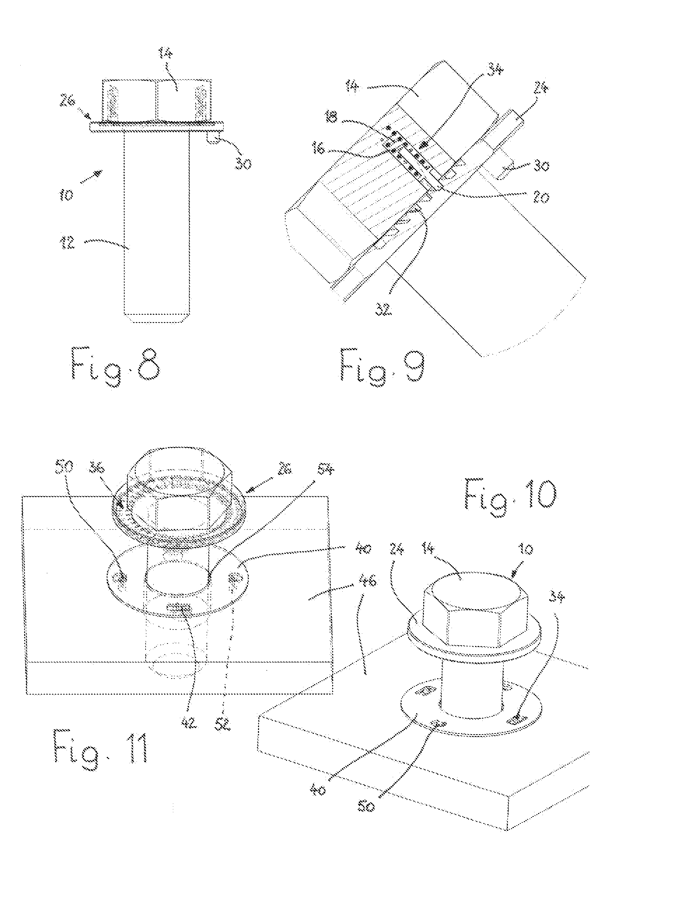

Die Figuren 8 und 9 zeigen ein von Figur 2 abgewandeltes Ausführungsbeispiel mit im Kopf 14 der Schraube 10 angeordneten, von jeweils einer Feder 18 belasteten, als Stift 20 ausgebildeten Eingriffselement 34, der in die Rastsitze 32 der widerhakenartigen Verzahnung 36 des Ringes 24 eingreift.

In den Figuren 10 und 11 ist ein plattenförmiges erstes Bauteil 46 gezeigt, an dem eine Schraube 10 gesichert werden soll, deren Schaft 12 durch eine Bohrung 54 des Bauteils 46 gesteckt ist. Im Bereich dieser Bohrung ist ein als ringförmige Blechscheibe ausgebildetes Verbindungselement 40 drehfest angebracht, aus dem diametral gegenüberliegend zwei an flachen Zungen 42 ausgebildete, federnde Eingriffselemente 34 nach oben abstehen, während an der Unterseite des Kopfes 14 der Schraube 10 das Sicherungselement 26 fest angebracht oder einstückig mit diesem Kopf 14 ausgebildet ist. An der Unterseite des als Ring 24 ausgebildeten Sicherungselementes 26 ist die Verzahnung 36 vorgesehen, deren Rastsitze 32 für den Eingriff der Zungen 42 dienen.

Aus dem Verbindungselement 40 sind hier zwei diametral gegenüberliegende Finger 50 ausgestanzt, die nach unten abgewinkelt sind und in jeweils einen Sitz 52 des Bauteils 46 eingreifen, wodurch das Verbindungselement 40 drehfest auf dem Bauteil 46 fixiert ist. Für die Verdrehsicherung wären auch nur ein Finger 50 oder mehr als zwei Finger 50 denkbar.

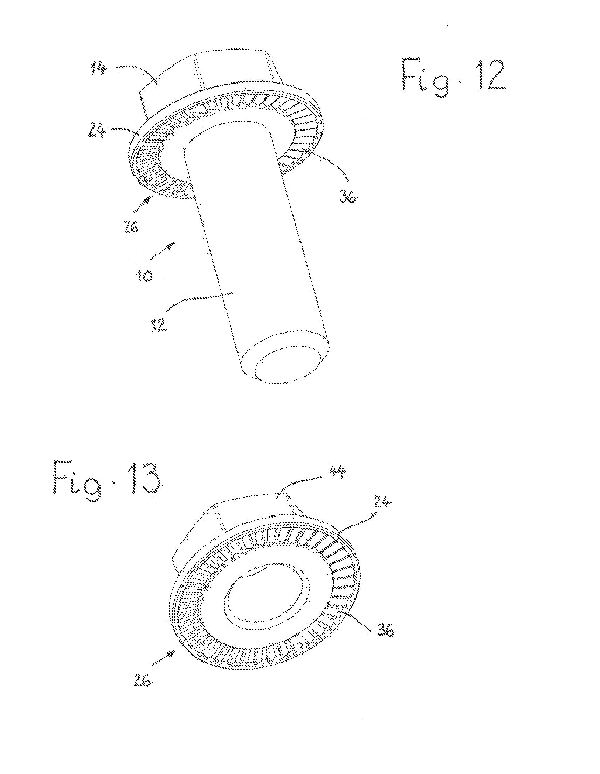

In Figur 12 ist die schräg von unten gesehene Ansicht einer Schraube 10 gezeigt, wie sie in der Anordnung der Figuren 10 und 11 eingesetzt ist. Hier ist nochmals gezeigt, dass die Unterseite des Kopfes 14 das als Ring 24 ausgebildete Sicherungselement 26 mit der Verzahnung 36 trägt.

Die Variante der Figur 13 zeigt einen ähnlich der Figur 12 ausgebildeten Ring 24 mit nach unten weisender Verzahnung 36, der an der Unterseite einer Mutter 44 ausgebildet ist.

Die einstückigen Varianten der Figuren 12 und 13 sind bei großen Stückzahlen wirtschaftlich besonders vorteilhaft.

Eine weitere Abwandlung der Konstruktion der Figuren 12 und 13 ist in Figur 14 dargestellt, bei der das Sicherungselement 26 mit seiner Verzahnung 36 in die Oberseite eines Bauteils 46 eingearbeitet ist, durch dessen Bohrung 54 eine zu sichernde Schraube 10 gesteckt werden kann, beispielsweise eine Schraube 10, wie sie in Figur 3 oder in den Figuren 8 und 9 gezeigt ist.

Die Figuren 15 und 16 zeigen eine Variante der Figur 14, bei der diametral zu beiden Seiten der Bohrung 54 in dem Bauteil 46 zwei federnd nach außen gedrückte Eingriffselemente 34 nach oben abstehen, die in die Verzahnung 36 an der Unterseite des Kopfes 14 einer Schraube 10 gemäß Figur 12 oder einer Mutter 44 gemäß Figur 13 einrasten.

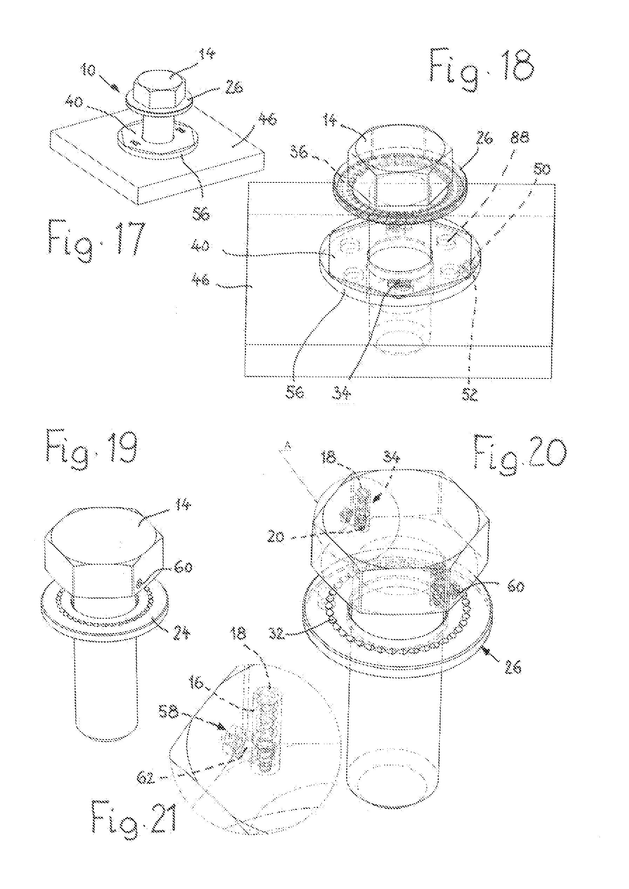

Eine andere Ausführungsmöglichkeit ergibt sich aus den Figuren 17 und 18, bei der eine ähnlich der Figur 12 ausgebildete Schraube 10 mit am Kopf 14 angeformtem Sicherungselement 26 mit Verzahnung 36 zum Einsatz kommt. Ähnlich wie in den Figuren 10 und 11 ist ein Verbindungselement 40 drehfest auf dem Bauteil 46 fixiert. Dieses Verbindungselement 40 ist hier als außen polygonförmige Scheibe ausgebildet und in einen entsprechenden Sitz einer runden Aufnahmeplatte 56 eingesetzt, von der ähnlich wie in Figur 11 gezeigt bolzenförmige Finger 50 drehfest in entsprechende Sitze 52 des Bauteils 46 eingreifen. Die Aufnahmeplatte 56 hat runde Aussparungen 88, in die die elastischen Eingriffselemente 34 zurückfedern können.

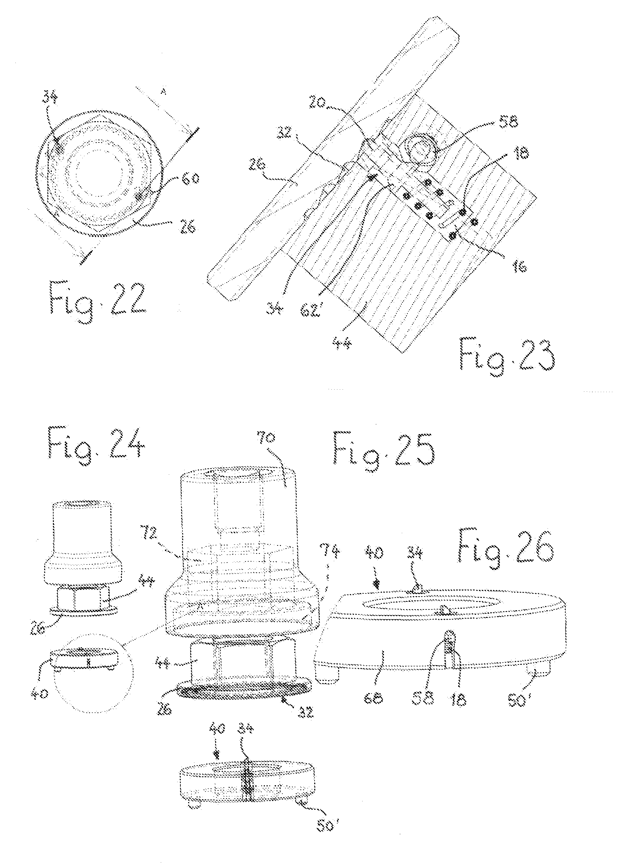

Die Figuren 19 bis 21 betreffen eine Variante der Figur 1 mit einer Schraube 10, die über ein als Ring 24 ausgebildetes Sicherungselement 26 an einem Bauteil gesichert werden soll. Wie im Beispiel der Figur 1 sind im Kopf 14 der Schraube 10 zwei durch jeweils eine Druckfeder 18 belastete, als Stift 20 ausgebildete Eingriffselemente 34 angebracht, die bei festgezogener Schraube 10 in den jeweiligen Rastsitz 32 des Sicherungselementes 26 eingreifen. Um die beiden Eingriffselemente 34 aus ihrer Raststellung von außen leicht lösen zu können, ist jedem Eingriffselement 34 ein Löseelement 58 zugeordnet, das über einen Druckknopf 60 seitlich aus dem Kopf 14 der Schraube 10 vorsteht. Der Druckknopf 60 kann durch ein Werkzeug, beispielsweise einen Steckschlüssel 70 ähnlich wie in den Figuren 24 und 25 gezeigt, nach innen verschoben werden, wodurch die Kegelspitze 62 des Druckknopfs 60 das Eingriffselement 34 gegen die Kraft der Feder 18 nach oben schiebt, so dass anschließend die Schraube 10 frei in ihre Lösestellung gedreht werden kann.

Diese in den Figuren 19 bis 21 gezeigte Ausführungsform ist in der Variante der Figuren 22 und 23 besser zu erkennen, bei der das Löseelement 58 mit Druckknopf 60 gegen einen Kegelabschnitt 62' des Eingriffselementes 34 verschoben werden kann, so dass dieses gegen die Kraft der Druckfeder 18 aus seiner Raststellung gedrückt wird. Das freie Ende des Eingriffselementes 34 wird damit aus seinem Rastsitz 32 im Sicherungselement 26 herausgezogen.

Eine Weiterbildung der Erfindung ergibt sich aus den Figuren 24 bis 26, bei denen eine nach Figur 13 ausgebildete Mutter 44 mit angeformtem Sicherungselement 26 zum Einsatz kommt. Zwischen das Sicherungselement 26 mit seinen Rastsitzen 32 ist ein Verbindungselement 40 eingesetzt, das hier nicht als Scheibe (wie in den Figuren 10 und 11 bzw. 18 und 19), sondern als ein zylindrisches Gehäuse 68 ausgebildet ist. Von der Unterseite des Gehäuses 68 stehen bolzenförmige Finger 50' ab, die in entsprechende Sitze (vgl. die Sitze 52 in den Figuren 11 und 18) des hier nicht gezeigten Bauteils eingreifen, wodurch das Verbindungselement 40 drehfest mit diesem Bauteil 46 verbunden ist.

In dem Gehäuse 68 des Verbindungselementes 40 sind zwei durch jeweils eine Feder 18 belastete Eingriffselemente 34 gelagert, die im festgezogenen Zustand der Mutter 44 in die darüberliegenden Rastsitze 32 eingreifen. Von den Eingriffselementen 34 stehen als radiale Finger ausgebildete Löseelemente 58 nach außen ab, die in Figur 26 zu erkennen sind und die vertikal nach unten verschoben werden können, um die Schraubsicherung zu lösen. Hierzu wird in vorteilhafter Weise ein in Figur 25 gezeigter, glockenförmiger Steckschlüssel 70 verwendet, der mit seinem Innensechskant 72 so über die Mutter 44 geschoben werden kann, dass seine zylindrische Öffnung 74 das Gehäuse 68 des Verbindungselementes 40 übergreift. Hierbei drückt der untere Rand die beiden Löseelemente 58 nach unten, wodurch die Eingriffselemente 34 aus ihren Rastsitzen 32 zurückgezogen werden. Anschließend kann dann durch Drehen des Steckschlüssels 70 die Mutter 44 von der nicht gezeigten Schraube gelöst werden.

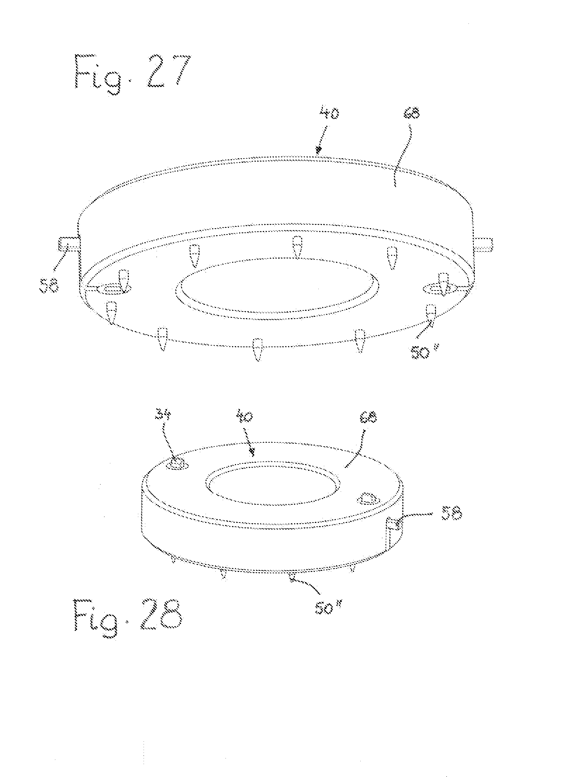

Die Figuren 27 und 28 zeigen eine Variante der Figur 26, bei der das als Gehäuse 68 ausgebildete Verbindungselement 40 an seiner Unterseite spitz zulaufende Finger 50" hat, die in ein Werkstück eingedrückt werden können, wenn dieses aus einem weichen Werkstoff besteht, beispielsweise aus Aluminium oder Kunststoff.

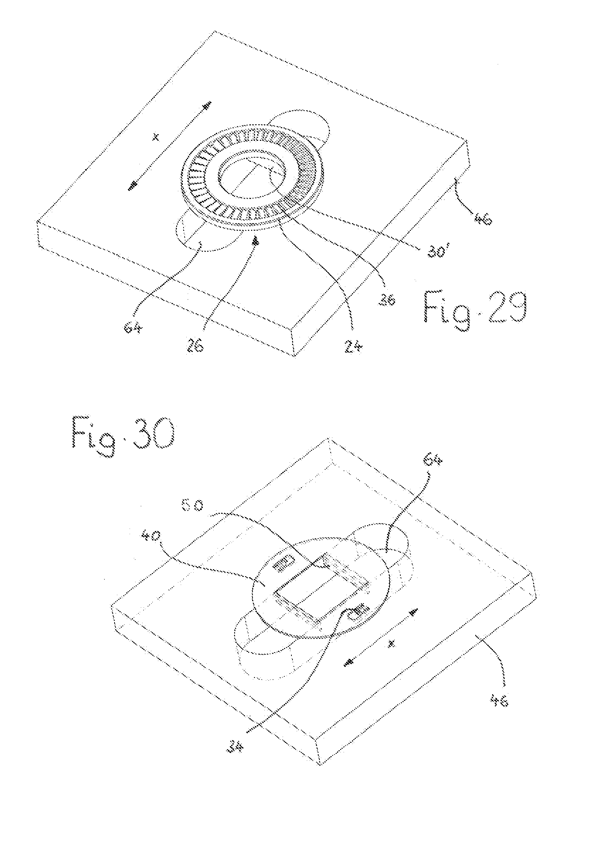

Die Figuren 29 und 30 zeigen ein plattenförmiges Bauteil 46 mit einem Langloch 64. Im Ausführungsbeispiel der Figur 29 greifen in dieses zwei nach unten ragende Fortsätze 30' eines als Ring 24 ausgebildeten Sicherungselementes 26 ein, das wie beim Beispiel der Figur 5 an seiner Oberseite eine Verzahnung 36 trägt. Die Fortsätze 30' sind hier als flache Zungen ausgebildet, deren Breite der Breite des Langlochs 64 entspricht. Auf diese Weise dienen sie als Verdrehschutz des Ringes 24 am Bauteil 46. Das Langloch 64 erlaubt dabei eine Verschiebung der Gewindeverbindung in x-Richtung und macht zusätzliche Eingriffsbohrungen im Bauteil 46 für die Fortsätze 30' entbehrlich.

Im Ausführungsbeispiel der Figur 30 ist auf dem Bauteil 46 ein als ringförmige Scheibe ausgebildetes Verbindungselement 40 ähnlich den Figuren 10 und 11 verdrehfest angeordnet. Zu diesem Zweck sind aus der aus Blech bestehenden Scheibe des Verbindungselementes 40 zwei als flache Zungen ausgebildete Finger 50 abgekantet, deren Breite der Breite des Langlochs 64 entsprechen. Analog zu Figur 29 ist auch hier das Verbindungselement 40 verdrehfest und in x-Richtung verschiebbar gelagert. Die nach oben abgewinkelten Eingriffselemente 34 dienen zum federnden Eingriff in die Rastsitze 32 einer Schraube 10 oder einer Mutter 44, beispielsweise wie in den Figuren 12 und 13 gezeigt. Da das Verbindungselement 40 aus Blech gefertigt und gestanzt werden kann, läßt sich diese Variante besonders kostengünstig herstellen.

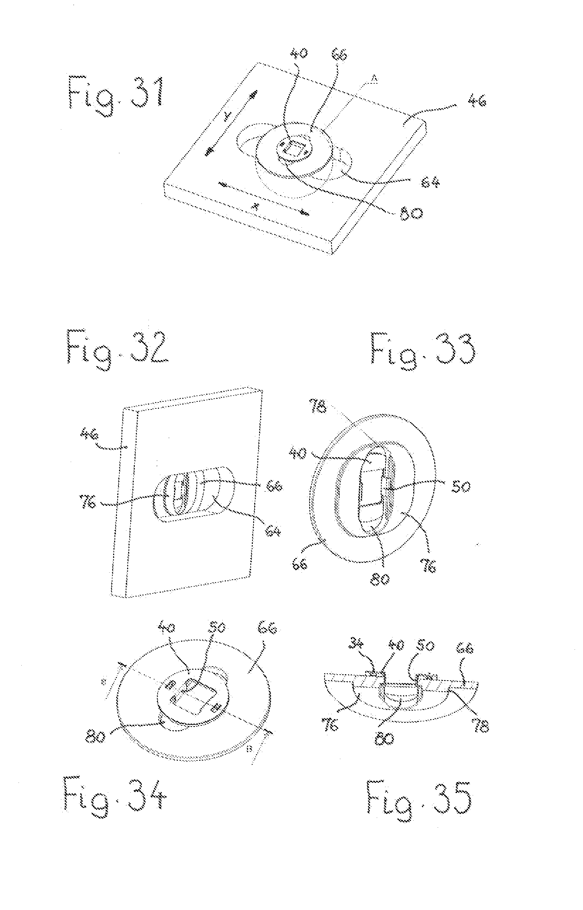

Die Figuren 31 bis 35 zeigen eine Variante der Figur 30, wobei hier das aus einer ringförmigen Blechscheibe hergestellte Verbindungselement 40 über eine Zwischenscheibe 66 verdrehfest auf dem Bauteil 46 gesichert ist. Von der Unterseite der Zwischenscheibe 66 steht ein Ansatz 76 ab, der in das Langloch 64 des Bauteils 46 eingreift. Der Ansatz 76 hat zwei diametral gegenüberliegende, gerade Führungsflächen 78, deren Abstand der Breite des Langlochs 64 entspricht, so dass die Zwischenscheibe 66 in x-Richtung in dem Langloch 64 verdrehsicher verschoben werden kann.

Insbesondere aus Figur 31 ergibt sich, dass auch die Zwischenscheibe 66 ein Langloch 80 hat, dessen Längserstreckung rechtwinklig zu derjenigen des Langlochs 64 verläuft. In dieses Langloch 80 greifen die beiden als flache Zungen ausgebildeten Finger 50 des scheibenförmigen Verbindungselementes 40 ein und liegen an den Längsseiten des Langlochs 80 an, so dass Verbindungselement 40 relativ zu der Zwischenscheibe 66 in y-Richtung verschoben werden kann. Mit den geschilderten Maßnahmen ist damit zusätzlich zur Schraubensicherung eine universelle Verstellbarkeit gewährleistet.

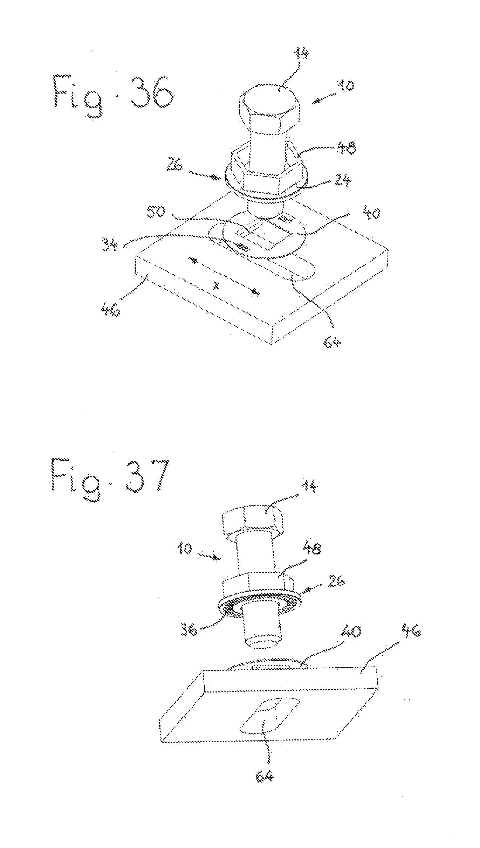

Die Figuren 36 und 37 zeigen die Kombination eines Verbindungselementes 40, das wie im Beispiel der Figur 30 längsverschieblich in dem Langloch 64 eines Bauteils 46 angeordnet ist, mit einem ähnlich der Figur 3 ausgebildeten Käfig 48 für eine handelsübliche Schraube 10. Der Kopf 14 der Schraube 10 greift in den sechseckigen Käfig 48 ein, an dessen Unterseite das als Ring 24 ausgebildete Sicherungselement 26 fest angebracht ist. An der Unterseite des Sicherungselementes 46 ist die Verzahnung 36 ausgebildet, in welche die beiden Eingriffselemente 34 des Verbindungselementes 40 bei festgezogener Schraubverbindung einrasten.

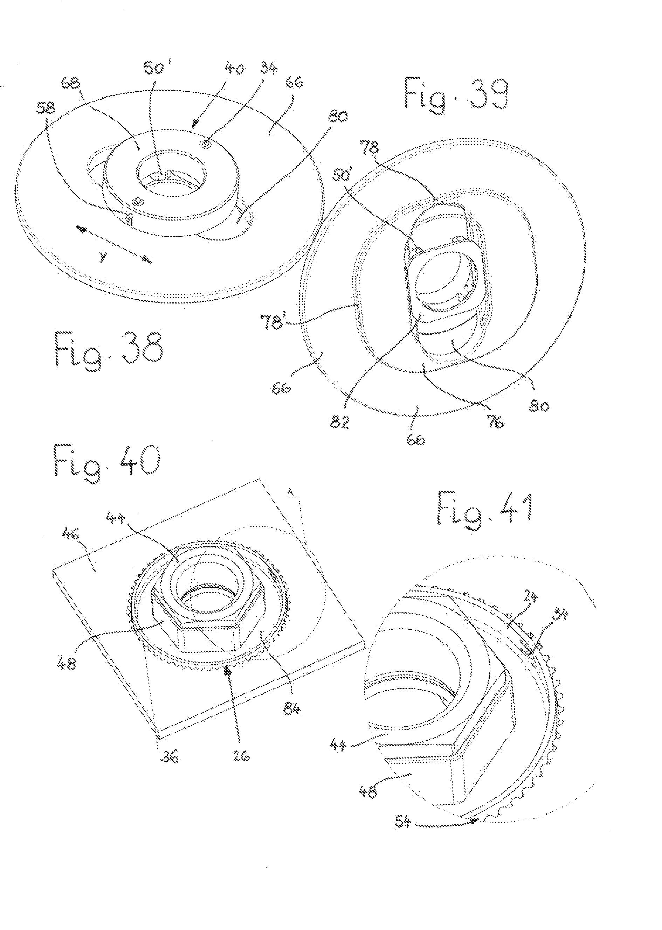

Die Figuren 38 und 39 zeigen die verdrehfeste Sicherung eines als Gehäuse 68 ausgebildeten Verbindungselementes 40 auf einer Zwischenscheibe 66, wie sie im Ausführungsbeispiel der Figuren 31 bis 35 erläutert ist. Auch hier steht von der Unterseite der Zwischenscheibe 66 ein Ansatz 76 mit zwei paarweise gegenüberliegenden, geraden Führungsflächen 78, 78' ab, deren Abstand der Breite des Langlochs 80 in der Zwischenscheibe 66 entspricht. Die Zwischenscheibe 66 wird mit ihrem Ansatz 76 vorzugsweise so in ein Langloch 64 eines Bauteils 46 eingesetzt, dass die beiden gegenüberliegenden Führungsflächen 78 zur Anlage an den Längsseiten des Langlochs 64 kommen; die Zwischenscheibe 66 kann somit - wie im Beispiel der Figuren 31 bis 35 - in x-Richtung auf dem hier nicht gezeigten Bauteil 46 verschoben werden. Zusätzlich kann die Schraubverbindung mit Hilfe eines in Figur 25 gezeigten Steckschlüssels 70 gelöst werden.

Die Konstruktion des als Gehäuse 68 ausgebildeten Verbindungselementes 40 entspricht im Wesentlichen der Figur 26 mit der Ausnahme, dass dieses nicht über bolzenförmige Finger 50' an seiner Unterseite verfügt, sondern über vier paarweise angeordnete Finger 50', deren Abstand zueinander der Breite des Langlochs 80 entspricht. Auf diese Weise ist auch hier eine Längsverschiebung des Verbindungselementes 40 in Richtung des Langloches 80 (y-Richtung) möglich. Die unteren Enden der Finger 50' sind über eine quadratische Lochscheibe 82 miteinander verbunden, so dass gemäß Figur 39 eine unverlierbare Einheit zwischen dem Verbindungselement 40 und der Zwischenscheibe 66 hergestellt ist.

In den Figuren 40 und 41 ist die Möglichkeit dargestellt, eine in einen Käfig 48 eingesetzte Mutter 44 in der Aufnahmebohrung 54 eines Bauteils 46 zu sichern. In Abwandlung der Ausführungsform der Figur 14 hat hier die Bohrung 54 eine Verzahnung 36, die sich in axialer Richtung über die Innenwand der Bohrung 54 erstreckt. In entsprechender Weise stehen bei dieser Variante die Eingriffselemente 34 über den Außenrand des hier als zylindrischer Ring 24 ausgebildeten Sicherungselementes 26 radial nach außen vor, um in die Verzahnung 36 einzurasten. Der zylindrische Ring 24 geht an seiner Unterseite in einen flachen, ringscheibenförmigen Boden 84 über, der einstückig mit dem Käfig 48 ausgebildet oder mit diesem fest verbunden ist.

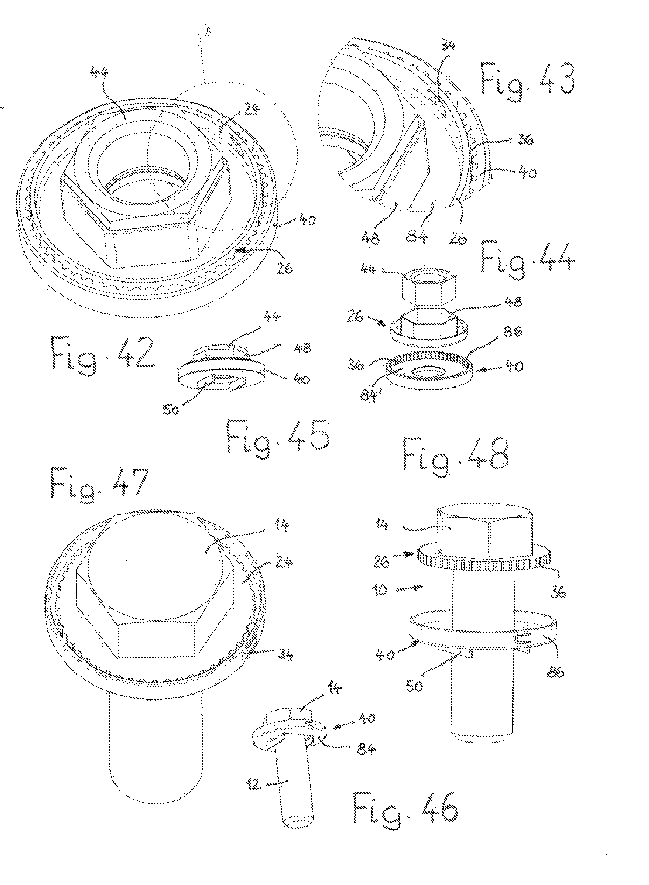

Während die Figuren 40 und 41 eine Verrastung des Käfigs 48 im Werkstück 46 zeigen, betrifft die in den Figuren 42 bis 45 dargestellte Variante eine Verrastung des Käfigs 48 für die Aufnahme einer genormten Mutter 44 in einem topfförmigen Verbindungselement 40, von dessen Unterseite ähnlich wie im Ausführungsbeispiel der Figuren 36 und 37 zwei als flache Zungen ausgebildete Finger 50 abstehen, die für den Eingriff in ein Langloch 64 eines hier nicht gezeigten Bauteils dienen. Hier ist das Verbindungselement 40 als ein zylindrischer Ring 86 ausgebildet, dessen Innenwand die Verzahnung 36 trägt und der in einen flachen, ringscheibenförmigen Boden 84' übergeht. Wie im Beispiel der Figuren 40 und 41 ist der Käfig 48 für die Aufnahme der Mutter 44 mit dem ringscheibenförmigen Boden 84 des Sicherungselementes 26 fest verbunden, dessen Eingriffselemente 34 über den Außenrand des zylindrischen Ringes 24 radial nach außen vorstehen, um in die Verzahnung 36 des Verbindungselementes 40 einzurasten.

Eine weitere Variante der Figuren 40 und 41 bzw. 42 bis 45 zeigen die Figuren 46 bis 48, bei denen an der Unterseite des Kopfes 14 einer Schraube 10 das als Ring 24 ausgebildete Sicherungselement 26 fest angebracht ist. In Abänderung der Ausführungsform der Figuren 10 und 11 ist hier die Verzahnung 36 des Sicherungselementes 26 an der Außenseite des Ringes 24 ausgebildet. Wenn die Schraube 10 gemäß den Figuren 46 und 47 in das topfförmigen Verbindungselement 40 eingesetzt ist, rasten dessen Eingriffselemente 34 in die Verzahnung 36 ein. Die Eingriffselemente 34 sind aus dem zylindrischen Ring 86 des Verbindungselementes 40 ausgestanzt, von dessen Boden 84 wie beim Beispiel der Figuren 44 und 45 die als flache Zungen ausgebildeten Finger 50 nach unten ragen.

## Patentansprüche

1. Vorrichtung zur Sicherung einer Gewindeverbindung an Bauteilen (46) mit einer Schraube (10) und/oder einer Mutter (44) und mit einem Sicherungselement (26), **dadurch gekennzeichnet, daß** das Sicherungselement (26) schon vor der Herstellung der Verbindung drehfest mit der Mutter (44) bzw. dem Kopf (14) der Schraube (10) oder mit dem Bauteil (46) verbunden ist und Rastsitze (32) aufweist, in die bei der Herstellung der Verbindung wenigstens ein Eingriffselement (34) eingreift, das in Richtung der Rastsitze (32) federnd ist.

2. Vorrichtung nach Anspruch 1, **dadurch gekennzeichnet, daß** das Sicherungselement (26) einstückig mit der Mutter (44) bzw. mit dem Kopf (14) der Schraube (10) ausgebildet oder fest damit verbunden ist.

3. Vorrichtung nach Anspruch 1, dass das Sicherungselement (26) einen Käfig (48) für die formschlüssige Aufnahme der Mutter (44) oder des Kopfes (14) der Schraube (10) hat.

4. Vorrichtung nach Anspruch 1, **dadurch gekennzeichnet, daß** das Sicherungselement (26) an dem Bauteil (46) ausgebildet ist.

5. Vorrichtung nach Anspruch 1, **dadurch gekennzeichnet, dass** das Sicherungselement (26) aus einem Ring (24) mit einer Durchtrittsöffnung (28) für den Schaft (12) der Schraube (10) besteht, von dem wenigstens ein Fortsatz (30) für den formschlüssigen Eingriff in einen Sitz (52) in dem Bauteil (46) absteht.

6. Vorrichtung nach Anspruch 5, **dadurch gekennzeichnet, dass** der Fortsatz (30) aus einem Bolzen und der Sitz (52) aus einer Bohrung besteht.

7. Vorrichtung nach Anspruch 5, **dadurch gekennzeichnet, dass** der Fortsatz (30') aus einer flachen Zunge und der Sitz aus einem Langloch (64) besteht.

8. Vorrichtung nach einem der vorhergehenden Ansprüche, **dadurch gekennzeichnet, dass** das federnde Eingriffselement (34) aus einem Rastzahn besteht.

9. Vorrichtung nach einem der Ansprüche 1 bis 7, **dadurch gekennzeichnet, dass** das federnde Eingriffselement (34) aus einem von einer Feder (18) beaufschlagten Raststift (20) besteht.

10. Vorrichtung nach einem der vorhergehenden Ansprüche, **dadurch gekennzeichnet, daß** das federnde Eingriffselement (34) von einem Verbindungselement (40) in Richtung der Rastsitze (32) absteht.

11. Vorrichtung nach Anspruch 10, **dadurch gekennzeichnet, dass** das Verbindungselement (40) drehfest mit dem Bauteil (46) verbunden ist.

12. Vorrichtung nach Anspruch 10, **dadurch gekennzeichnet, dass** das Verbindungselement (40) drehfest mit der Mutter (44) oder mit dem Kopf (14) der Schraube (10) verbunden ist.

13. Vorrichtung nach Anspruch 12, **dadurch gekennzeichnet, dass** das Verbindungselement (40) einen Käfig (48) für die formschlüssige Aufnahme der Mutter (44) oder des Kopfes (14) der Schraube (10) hat.

14. Vorrichtung nach einem der Ansprüche 10 bis 13, **dadurch gekennzeichnet, dass** das Verbindungselement (40) aus einer ringförmigen Scheibe besteht.

15. Vorrichtung nach einem der Ansprüche 10 bis 12, **dadurch gekennzeichnet, dass** das Verbindungselement (40) aus einem ringförmigen Gehäuse (68) besteht, in dem das Eingriffselement (34) gegen Federkraft verschiebbar gelagert ist.

16. Vorrichtung nach einem der Ansprüche 9 bis 15, **dadurch gekennzeichnet, dass** dem federnd verschiebbaren Eingriffselement (34) ein gegen die Federkraft wirkendes Löseelement (58) zugeordnet ist.

17. Vorrichtung nach einem der Ansprüche 10 bis 16, **dadurch gekennzeichnet, dass** zwischen das Bauteil (46) und das Verbindungselement (40) eine Zwischenscheibe (66) eingesetzt ist, die in einem Langloch (64) des Bauteils (46) in x-Richtung verschiebbar ist und ein zu dem Langloch (64) des Bauteils (46) rechtwinklig ausgerichtetes Langloch (80) hat, in dem das Verbindungselement (40) in y-Richtung verschiebbar ist.

18. Vorrichtung nach einem der vorhergehenden Ansprüche, **dadurch gekennzeichnet, daß** die Rastsitze (32) aus einer Verzahnung (36) oder einem Lochkranz bestehen.

19. Vorrichtung nach Anspruch 18, **dadurch gekennzeichnet, dass** die Rastsitze (32) an der zylindrischen Außenseite des Sicherungselementes (26) oder an der zylindrischen Innenseite der Aufnahmebohrung (54) des Bauteils (46) oder eines topfförmigen Verbindungselementes (40) ausgebildet sind.
